(19) Europäisches Patentamt
European Patent Office
Office européen des brevets

(11) EP 3 876 141 B1

(12) **EUROPEAN PATENT SPECIFICATION**

(45) Date of publication and mention of the grant of the patent:
**19.11.2025 Bulletin 2025/47**

(21) Application number: **19886206.2**

(22) Date of filing: **11.06.2019**

(51) International Patent Classification (IPC):
***G06T 7/593*** *(2017.01)* ***G06T 5/50*** *(2006.01)*
***G06F 18/25*** *(2023.01)* ***G06V 10/40*** *(2022.01)*
***G06V 10/80*** *(2022.01)* ***G06V 20/58*** *(2022.01)*

(52) Cooperative Patent Classification (CPC):
**G06T 7/593; G06F 18/251; G06T 5/50; G06V 10/40; G06V 10/803; G06V 20/58;**
G06T 2207/10012; G06T 2207/10028; G06T 2207/20221; G06T 2207/30252

(86) International application number:
**PCT/CN2019/090696**

(87) International publication number:
**WO 2020/103427 (28.05.2020 Gazette 2020/22)**

(54) **OBJECT DETECTION METHOD, RELATED DEVICE AND COMPUTER STORAGE MEDIUM**

OBJEKTDETEKTIONSVERFAHREN, ZUGEHÖRIGE VORRICHTUNG UND COMPUTERSPEICHERMEDIUM

PROCÉDÉ DE DÉTECTION D’OBJET, DISPOSITIF ASSOCIÉ ET SUPPORT D’INFORMATIONS D’ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2018 CN 201811409485**

(43) Date of publication of application:
**08.09.2021 Bulletin 2021/36**

(73) Proprietor: **Shenzhen Yinwang Intelligent Technologies Co., Ltd.**
**Shenzhen, Guangdong 518129 (CN)**

(72) Inventors:
- **FANG, Minquan**
  **Shenzhen, Guangdong 518129 (CN)**
- **LI, Yueliang**
  **Shenzhen, Guangdong 518129 (CN)**
- **LI, Huaizhou**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**WO-A1-2017/122529**
**CN-A- 108 122 280**
**CN-A- 108 427 438**
**CN-A- 108 594 244**
**CN-A- 108 828 606**
**CN-A- 108 828 606**
**CN-A- 109 614 889**
**KR-B1- 101 532 320**
**US-A1- 2017 310 945**

- **JAN FISCHER ET AL: "Combination of Time-of-Flight depth and stereo using semiglobal optimization", ROBOTICS AND AUTOMATION (ICRA), 2011 IEEE INTERNATIONAL CONFERENCE ON, IEEE, 9 May 2011 (2011-05-09), pages 3548 - 3553, XP032033860, ISBN: 978-1-61284-386-5, DOI: 10.1109/ICRA.2011.5979999**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 876 141 B1

- YOU LI: "Stereo vision and LIDAR based Dynamic Occupancy Grid mapping : Application to scenes analysis for Intelligent Vehicles", PHD THESIS, 23 April 2014 (2014-04-23), Universit� de Technologie de Belfort-Montbeliard, pages 1 - 179, XP055291446, Retrieved from the Internet <URL:http://www.i3s.unice.fr/~yli/pdf/thesis.pdf> [retrieved on 20160726]

## Description

### TECHNICAL FIELD

The present invention relates to the field of computer technologies, and in particular, to an object detection method, a related device, and a computer storage medium.

### BACKGROUND

In the field of unmanned driving, safe driving of a vehicle mainly depends on sensing and detection of an environment around the vehicle. Currently, because of a relatively high resolution of a lidar, a three-dimensional point cloud image of a scene can be relatively accurately restored and constructed, to implement object detection and recognition in the scene.

However, it is found in practice that the lidar is easily affected by weather conditions and has a limited detection distance. This reduces accuracy of object detection. For example, in adverse weather environments such as foggy weather and rainy weather, the detection distance of the lidar is drastically reduced, affecting accuracy of object detection. In addition, point cloud data obtained when the lidar is used for object detection is very sparse, and it is difficult to implement object detection based on the sparse point cloud data.

The document CN 108 828 606 A shows a computer vision system merging data of a LIDAR ranging device with data of several stereoscopic ranging devices.

The document FISHER ET AL: "Combination of Time-of-Flight Depth and Stereo using Semiglobal Optimization", XP032033860 also shows a merging of LIDAR data and stereoscopic data.

The document US 2017/0310945 A1 shows a system and method for live action volumetric video compression and decompression, as well as playback.

The document WO 2017/122529 A1 shows a system and method for fusing outputs of sensors, having different resolutions.

### SUMMARY

The present invention is defined by the independent claims. advantageous features are defined in the dependent claims.

Embodiments of the present invention disclose an object detection method, a related device, and a computer storage medium, to resolve problems in the prior art such as low accuracy of object detection and difficulty in implementing object detection.

According to a first aspect, an embodiment of the present invention discloses and provides an object detection method, where the method includes: A computing device determines an object region of binocular image, obtains two-dimensional coordinates of m pixel pairs from the object region of the binocular image, and further, determines three-dimensional coordinates of a to-be-detected object in a camera coordinate system based on the two-dimensional coordinates of the m pixel pairs. The camera coordinate system is a coordinate system formed by using either lens of a dual-lens camera as an origin. Further, the computing device converts the three-dimensional coordinates of the to-be-detected object in the camera coordinate system into data in a coordinate system in which laser point cloud data of the to-be-detected object is located, and merges the data with the laser point cloud data into merged point cloud data. The laser point cloud data is data obtained by scanning the to-be-detected object by using a lidar. Finally, the computing device determines the to-be-detected object based on the merged point cloud data. Optionally, in the present invention, the binocular images include a first image and a second image that are captured by using the dual-lens camera, each of the m pixel pairs includes two pixels, one pixel is from the first image, and the other pixel is from the second image, and pixels in each pixel pair respectively correspond to a same feature of an object region in the first image and the second image. In other words, the two pixels are a mapped pixel pair of an object region of the binocular image, and either pixel is a mapped pixel of the other.

Through implementation of the embodiments of the present invention, problems in the prior art such as low accuracy of object detection or difficulty in implementing object detection can be resolved.

With reference to the first aspect, in a first possible implementation of the first aspect, the computing device may determine three-dimensional coordinates of the to-be-detected object in an image coordinate system based on the two-dimensional coordinates of the m pixel pairs. The three-dimensional coordinates of the to-be-detected object in the image coordinate system include two-dimensional coordinates and depth values of the to-be-detected object in a coordinate system established based on the first image. Further, the computing device converts the three-dimensional coordinates of the to-be-detected object in the image coordinate system into the three-dimensional coordinates of the to-be-detected object in the camera coordinate system based on a focal length of the dual-lens camera and an offset of an origin in the image coordinate system relative to an origin in the camera coordinate system.

With reference to the first possible implementation of the first aspect, in a second possible implementation of the first aspect, the computing device calculates a depth value of each of the m pixel pairs based on the two-dimensional coordinates of the m pixel pairs and a baseline and the focal length of the dual-lens camera. Two-dimensional coordinates of the pixel pair include two-dimensional coordinates of one pixel in the pixel pair that is located in the first image and two-dimensional coordinates of the other pixel in the pixel pair that is located in the second image. The computing device determines a first pixel based on the depth value of each of the m pixel

pairs. A depth value of the first pixel does not exceed a first preset value. The first preset value may be specifically a system-defined value, for example, an empirical value set by a user, or a value obtained by collecting statistics based on some columns of statistics. The three-dimensional coordinates of the to-be-detected object in the image coordinate system include three-dimensional coordinates of the first pixel in the image coordinate system.

With reference to the first or the second possible implementation of the first aspect, in a third possible implementation of the first aspect, the depth value of the first pixel specifically does not exceed a sum of an average depth value and a second preset value. The average depth value is an average value of the depth values of all the m pixel pairs. The second preset value may be specifically a system-defined value. Optionally, the second preset value may be a depth standard deviation. The depth standard deviation is specifically a standard deviation of the depth values of all the m pixel pairs.

With reference to the second or the third possible implementation of the first aspect, in a fourth possible implementation of the first aspect, the computing device interpolates the first pixel based on a preset interpolation algorithm, to obtain a first interpolated pixel. Three-dimensional coordinates of the first interpolated pixel in the image coordinate system are included in the three-dimensional coordinates of the to-be-detected object in the image coordinate system. In other words, the three-dimensional coordinates of the to-be-detected object in the image coordinate system include the three-dimensional coordinates of the first interpolated pixel in the image coordinate system.

With reference to any one of the first aspect or the first to the fourth possible implementations of the first aspect, in a fifth possible implementation of the first aspect, the merged point cloud data further includes three-dimensional coordinates of a second interpolated pixel in the coordinate system in which the laser point cloud data is located. The second interpolated pixel is specifically a pixel obtained by the computing device by interpolating the laser point cloud data and the data obtained through conversion in the coordinate system in which the laser point cloud data of the to-be-detected object is located by using the preset interpolation algorithm.

With reference to any one of the first aspect or the first to the fifth possible implementations of the first aspect, the binocular images are images obtained after images captured by the dual-lens camera are processed by using a distortion parameter and an extrinsic parameter matrix of the binocular images.

According to a second aspect, an embodiment of the present invention provides a computing device. The apparatus includes a function module or unit configured to perform the method described in any one of the first aspect or the possible implementations of the first aspect.

According to a third aspect, an embodiment of the present invention provides a computing device, including a processor, a memory, a communication interface, and a bus. The processor, the communication interface, and the memory communicate with each other through the bus. The communication interface is configured to receive and send data. The memory is configured to store an instruction. The processor is configured to invoke the instruction in the memory, to perform the method described in any one of the first aspect or the possible implementations of the first aspect.

According to a fourth aspect, a computer non-transitory (non-transitory) storage medium is provided. The computer non-transitory storage medium stores program code used for object detection. The program code includes an instruction used to perform the method described in any one of the first aspect or the possible implementations of the first aspect.

According to a fifth aspect, a chip product is provided, to perform the method in any one of the first aspect or the possible implementations of the first aspect.

Based on the implementations provided in the foregoing aspects, the present invention may be further combined to provide more implementations.

## BRIEF DESCRIPTION OF DRAWINGS

To describe the technical solutions in the embodiments of the present invention or in the prior art more clearly, the following briefly describes the accompanying drawings for describing the embodiments or the prior art.

FIG. 1A and FIG. 1B are schematic diagrams of two possible network frameworks according to an embodiment of the present invention;

FIG. 2 is a schematic flowchart of an object detection method according to an embodiment of the present invention;

FIG. 3 is a schematic diagram of a photographing scenario of a dual-lens camera according to an embodiment of the present invention;

FIG. 4 is a schematic diagram of corrected binocular images according to an embodiment of the present invention;

FIG. 5 is a schematic diagram of an object region of a to-be-detected object in binocular images according to an embodiment of the present invention;

FIG. 6 is a schematic diagram of a pixel pair in an object region of binocular image according to an embodiment of the present invention;

FIG. 7A is a schematic diagram of depth value calculation according to an embodiment of the present invention;

FIG. 7B is a schematic diagram of a feature pixel in different coordinate systems according to an embodiment of the present invention;

FIG. 8 is a schematic diagram of a scenario about a camera coordinate system and a lidar coordinate

system according to an embodiment of the present invention;

FIG. 9 is a schematic diagram of merged point cloud data according to an embodiment of the present invention;

FIG. 10 is a schematic diagram of merged point cloud data clustering according to an embodiment of the present invention;

FIG. 11 is a schematic structural diagram of an object detection apparatus according to an embodiment of the present invention; and

FIG. 12 is a schematic structural diagram of a computing device according to an embodiment of the present invention.

## DESCRIPTION OF EMBODIMENTS

The following describes the embodiments of the present invention with reference to accompanying drawings.

To resolve problems in the prior art such as low accuracy of object detection or difficulty in implementing object detection, the present invention provides an object detection method, a network framework to which the method is applicable, and a related device.

First, FIG. 1A is a schematic diagram of a possible network framework according to an embodiment of the present invention. As shown in FIG. 1, the network framework includes a vehicle 100, a dual-lens camera unit 102, a lidar 103, and a computing device 104. The dual-lens camera unit 102 is configured to capture binocular images. The dual-lens camera unit may include two photographing units, for example, a left photographing unit and a right photographing unit. An image captured by the left photographing unit may be referred to as a left image. An image captured by the right photographing unit may be referred to as a right image. In an actual application, either photographing unit included in the dual-lens camera unit may be specifically any one of the following: an event data recorder, a camera, a photographing apparatus, a camera, or another device having a photographing function. The dual-lens camera unit may be specifically deployed in any one or more of the following devices: the vehicle 100, the computing device 104, or another device (such as a mobile phone or a computer). In the figure herein, an example in which the dual-lens camera unit is deployed in the vehicle 100 is used, and does not constitute a limitation. The lidar 103 is configured to scan and detect a to-be-detected object, to obtain laser point cloud data of the to-be-detected object. The laser point cloud data is point cloud data obtained by scanning the to-be-detected object by using the lidar. The point cloud data is recorded in a form of points. Each point includes a three-dimensional coordinate. In addition to describing a geometric location of the point, the three-dimensional coordinate may also have depth information and the like. This is not limited in the present invention.

The computing device 104 is configured to: obtain the binocular images, and obtain visual point cloud data of a to-be-detected object in the image based on the binocular images, that is, convert three-dimensional coordinates of a pixel of the to-be-detected object in the image into data having coordinates the same as those of the laser point cloud data. Further, the computing device 104 may detect and recognize the to-be-detected object based on the visual point cloud data and optionally with reference to the laser point cloud data of the to-be-detected object. How to detect and recognize the to-be-detected object is specifically described in detail below in the present invention.

In an actual application, the computing device 104 may be deployed in the vehicle 100 for use, or may be separately deployed (specifically as described in detail in the following example in FIG. 1B). This is not limited in the present invention. An example in which the computing device 104 is deployed in the vehicle 100 is used for illustration herein. The computing device includes but is not limited to any one of the following: a mobile phone, a tablet personal computer (table personal computer), a personal digital assistant (personal digital assistant, PDA), a mobile internet device (mobile internet device, MID), a wearable device (wearable device), a vehicle-mounted device, and another device that supports communication with a network. It should be noted that a scenario to which the present invention is applicable includes but is not limited to the self-driving field, the obstacle detection field, and any other scenario in which object detection is required.

A sensor is mounted (or deployed) in the vehicle 100, and is configured to collect sensor data associated with the sensor. The sensor includes but is not limited to a lidar, a global positioning system (global positioning system, GPS), and the like. For example, the sensor is a lidar sensor. The vehicle 100 may invoke the lidar sensor to scan the to-be-detected object, to obtain the laser point cloud data of the to-be-detected object. Optionally, the vehicle 100 may send the collected laser point cloud data of the to-be-detected object to the computing device 104, so that the computing device 104 detects and recognizes the to-be-detected object based on the laser point cloud data. For details of the laser point cloud data, refer to related descriptions in the foregoing embodiment. Details are not described herein again. The to-be-detected object is system-defined. For example, the to-be-detected object may include but is not limited to a vehicle, a person, a dog, a tree, a building, a cup, another object, or the like.

Optionally, the dual-lens camera unit is further deployed in the vehicle 100. For details of the dual-lens camera unit, refer to related descriptions in the foregoing embodiment. Details are not described herein again. A deployment manner and a deployment location of each device or element deployed in the vehicle 100 are not limited in the present invention. In FIG. 1A, the dual-lens camera unit 102 is used as an example. The dual-lens camera unit 102 may be specifically deployed outside the

vehicle 100. In the figure, the dual-lens camera unit 102 is deployed outside a skylight of the vehicle. Optionally, a mounting angle of the dual-lens camera unit may also be customized based on an actual requirement of a user or a preference of the user. This is not limited in the present invention.

In an actual application, the vehicle 100 may include but is not limited to a truck, a van, a train, a car, a motorcycle, an off-road vehicle, a farm vehicle, or another vehicle or device.

In this embodiment of the present invention, any two of the vehicle 100, the dual-lens camera unit 102, and the computing device 104 may implement network communication between devices by using a wired communications technology or a wireless communications technology. The wired communications technology may mean that two devices communicate with each other by using a network cable, an optical fiber, or the like. The wireless communications technology includes but is not limited to a global system for mobile communications (global system for mobile communications, GSM), a general packet radio service (general packet radio service, GPRS), code division multiple access (code division multiple access, CDMA), wideband code division multiple access, (wideband code division multiple access, WCDMA), time-division code division multiple access (time-division code division multiple access, TD-SCDMA), long term evolution (long term evolution, LTE), wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared technology (infrared, IR), and the like. FIG. 1B is a schematic diagram of another possible network framework according to an embodiment of the present invention. The network framework includes a dual-lens camera unit 202 and a computing device 204.

The dual-lens camera unit 202 is deployed in a local terminal device 206. The terminal device includes but is not limited to a vehicle, a mobile phone, a tablet personal computer (table personal computer), a personal digital assistant (personal digital assistant, PDA), a mobile internet device (mobile internet device, MID), a wearable device (wearable device), and another device that supports communication with a network.

The computing device 204 is deployed on a cloud network side. For example, the computing device 204 is deployed on a cloud server in the figure. The computing device 204 communicates, through the network, with the terminal device in which the dual-lens camera unit 202 is deployed, to obtain binocular images captured by the dual-lens camera unit 202, to detect and recognize a to-be-detected object in the image. After completing recognition of the to-be-detected object, the computing device may obtain a recognition result of the to-be-detected object. Optionally, the computing device may send the recognition result of the to-be-detected object to the terminal device through the network, so that the terminal device learns of the recognition result of the to-be-detected object. For specific content that is not described or not shown in this embodiment of the present invention, refer to related descriptions in the embodiment in FIG. 1A. Details are not described herein again.

Based on the foregoing embodiments, the following describes an object detection method in the present invention. Referring to FIG. 2, FIG. 2 is a schematic flowchart of a still another inter-network change method disclosed in an embodiment of the present invention. The object detection method shown in FIG. 2 includes the following implementation steps.

Step S201: A computing device obtains binocular images, where the binocular images are images that are captured by using a dual-lens camera and that include a first image and a second image.

In the present invention, the computing device may capture the binocular images by invoking a dual-lens camera mounted in the computing device or by invoking a dual-lens camera in another device. The binocular images include the first image and the second image. When the first image is a left image, the second image is a right image. When the first image is a right image, the second image is a left image. The left image is an image obtained through shooting by using a left-side lens (that is, a left lens) in the dual-lens camera. The right image is an image obtained through shooting by using a right-side lens (that is, a right lens) in the dual-lens camera.

FIG. 3 is a schematic diagram of a photographing scenario of a dual-lens camera. As shown in FIG. 3, because shooting angles of lenses of the dual-lens camera are different, binocular images obtained by the dual-lens camera by shooting a same object are also different. As shown in the figure, a left lens A performs photographing to obtain a left image A, and a right lens B performs photographing to obtain a right image B.

Optionally, the binocular images may be preprocessed images. Specifically, the computing device may preprocess the binocular images captured by the dual-lens camera. The pre-processing includes but is not limited to de-distortion processing, translation processing, rotation processing, other processing used to correct an image, or the like. For example, the computing device performs distortion removal processing on the captured binocular images by using a distortion parameter of the dual-lens camera. Optionally, the computing device may further correct the binocular images by using an extrinsic parameter matrix (an extrinsic parameter) of the dual-lens camera, so that epipolar lines of the corrected binocular images are collinear. The extrinsic parameter matrix represents a relative posture between the left lens and the right lens, and is specifically used to adjust impact of a difference in the relative posture on the binocular images.

FIG. 4 is a schematic diagram of corrected binocular images. As shown in FIG. 4, the corrected binocular images include a first image and a second image. Three epipolar lines in the first image are respectively $l_0$, $l_1$, and $l_2$. Three epipolar lines in the second image are respectively $I_0^{'}$ 、 $I_1^{'}$, and $I_2^{'}$. As shown in the figure, $l_0$ and $I_0^{'}$ are on a same straight line (that is, $l_0$ and $I_0^{'}$ are collinear), $l_1$ and $I_1^{'}$ are on a same straight line, and $l_2$ and $I_2^{'}$ are on a same straight line.

Step S202: The computing device detects and recognizes a to-be-detected object in the binocular images by using a preset object detection algorithm, to obtain an object region in the binocular images. The object region is an image region occupied by the to-be-detected object in the binocular images.

Specifically, the computing device may detect and recognize a to-be-detected object in the first image by using a first object detection algorithm, to obtain an image region occupied by the to-be-detected object in the first image, that is, the object region. Correspondingly, the computing device may detect and recognize a to-be-detected object in the second image by using a second object detection algorithm, to obtain an image region occupied by the to-be-detected object in the second image, that is, the object region.

Both the first object detection algorithm and the second object detection algorithm are system-defined object detection algorithms, and are used to detect and recognize the to-be-detected object. The first object detection algorithm and the second object detection algorithm may be the same or may be different. This is not limited in the present invention. The object detection algorithm includes but is not limited to any one of or a combination of a plurality of the following: a convolutional neural network (convolutional neural networks, CNN), a region-based convolutional neural network (region-based convolutional neural networks, RCNN), a you only look once neural network (you only look once, YOLO), and object detection based on a single deep neural network (single shot multibox detector, SSD), a deep feedforward neural network (deep feed forward, DFF), a recurrent neural network (recurrent network, RNN), another algorithm used for object detection, or the like.

For example, it is assumed that the object detection algorithm is an SSD algorithm. When recognizing an object region, the computing device may separately use binocular images including the first image and the second image as inputs of the SSD, and recognize, by using the SSD, that an image region in which a to-be-detected image in the first image is located is the object region in the first image. Correspondingly, the image region in which the to-be-detected image in the second image recognized by using the SSD is located is the object region in the second image. Optionally, after recognizing, by using the object detection algorithm, the object region in which the to-be-detected object is located in the image, the computing device may further mark the object region by using a preset box, to present the object region to the user for viewing. The preset box may be system-defined, for example, set based on a user requirement or an actual hobby, and a shape of the preset box is not limited. For example, the preset box may be any one of the following: a rectangle, a rhombus, a circle, or the like.

A quantity of to-be-detected objects is not limited in the present invention. When there are a plurality of to-be-detected objects, there are also a plurality of object regions in which the to-be-detected objects are located. FIG. 5 is a schematic diagram of an object region in which a to-be-detected object is located in binocular images. As shown in FIG. 5, the computing device recognizes, by using an object detection algorithm, that a first image in the binocular images includes three to-be-detected objects: to-be-detected objects 1 to 3. As shown in the figure, rectangular boxes are used to outline object regions in which the three to-be-detected objects are respectively located: a region A, a region B, and a region C. Specifically, an object region of the to-be-detected object 1 in the first image is the region A, an object region of the to-be-detected object 2 in the first image is the region B, and an object region of the to-be-detected object 3 in the first image is the region C. Similarly, the computing device recognizes that a second image in the binocular images includes three to-be-detected objects. As shown in the figure, rectangular boxes are used to outline object regions in which the three to-be-detected objects are respectively located: a region A', a region B', and a region C'.

Optionally, after the computing device recognizes the object region in which the to-be-detected object is located in the binocular images, if there are n to-be-detected objects, there are also n object regions in which the to-be-detected objects are located in the binocular images, where n is a positive integer. Further, the computing device may further match respective object regions of the n to-be-detected objects in the first image with respective object regions of the n to-be-detected objects in the second image, to obtain n object region pairs of the binocular images. Each object region pair includes an object region in which a same to-be-detected object is located in the first image and an object region in which the to-be-detected object is located in the second image. Each object region may be identified by using same label information. The label information is used to recognize an object region in which a same to-be-detected object is located in the binocular images, and may be specifically a name, a number, a letter symbol, or the like of the to-be-detected object. This is not limited in the present invention.

For example, referring to the example in FIG. 5, FIG. 5 includes three object region pairs. Specifically, the region A and the region A' constitute an object region pair,

that is, image regions in which the to-be-detected object 1 that are separately located in the binocular images. The region B and the region B' constitute an object region pair, that is, image regions in which the to-be-detected object 2 that are separately located in the binocular images. The region C and the region C' constitute an object region pair, that is, image regions in which the to-be-detected object 3 that are separately located in the binocular images.

After the computing device obtains the n object region pairs of the binocular images through matching, the computing device may perform the following step S203: performing feature extraction on each object region in each of the n object region pairs, to obtain respective feature pixels in the object region of the binocular image. In the present invention, n=1 (one to-be-detected object and one object region pair) is used as an example below to describe related content.

Step S203: The computing device performs feature extraction on the object region of the binocular image to obtain respective feature pixels in the object region of the binocular image, that is, obtain a feature pixel in the object region of the first image and a feature pixel in the object region of the second image.

Specifically, the computing device may perform feature extraction on the object region of the first image by using a first feature extraction algorithm, to obtain the feature pixel in the object region of the first image. Similarly, the computing device performs feature extraction on the object region of the second image by using a second feature extraction algorithm, to obtain the feature pixel in the object region of the second image. A quantity of feature pixels is not limited, and may be specifically one or more. In an actual application, there are usually two or more feature pixels in the object region.

Both the first feature extraction algorithm and the second feature extraction algorithm are system-defined, and are used for image feature extraction. The first feature extraction algorithm and the second feature extraction algorithm may be the same, or may be different. This is not limited in the present invention. The feature extraction algorithm includes but is not limited to any one of or a combination of a plurality of the following: an oriented FAST and rotated BRIEF (oriented brief, ORB) extraction algorithm, a histogram of oriented gradient feature (histogram of oriented gradient, HOG) extraction algorithm, a local binary pattern feature (local binary pattern, LBP) extraction algorithm, a Haar feature extraction algorithm, or another algorithm used for image feature extraction.

Step S204: The computing device determines m pixel pairs based on the feature pixels in the object region of the binocular image. The m pixel pairs are pixel pairs obtained by sampling an object region of the to-be-detected object. Each pixel pair includes two pixels, one pixel is from the first image, and the other pixel pair is from the second image. The pixels in each pixel pair respectively correspond to a same feature of an object region in the first image and an object region in the second image. To be specific, each pixel pair includes a reference pixel in the object region of the first image and a mapped pixel corresponding to the reference pixel in the object region of the second image. Both the reference pixel and the mapped pixel are feature pixels in the object region.

After obtaining the respective feature pixels in the object region of the binocular image, the computing device may further determine the m pixel pairs. Each pixel pair includes the respective feature pixels at a same location correspondingly in the first image and the second image (the binocular images). To be specific, each pixel includes a reference pixel in the object region of the first image and a mapped pixel that is in the object region of the second image and that corresponds to the reference pixel. The reference pixel and the mapped pixel correspond to each other, have a same image feature, and are both feature pixels obtained after feature extraction.

Specifically, the computing device may use a feature pixel included in an object region of any image in the binocular images as a reference pixel, find a mapped pixel corresponding to the reference pixel in an object region of another image, and further form a pixel pair by using the reference pixel and the mapped pixel. For example, the computing device may use any feature pixel in the object region of the first image as a reference pixel, and find/calculate a mapped pixel at a location corresponding to the reference pixel from the object region of the second image. Correspondingly, the computing device may determine the m pixel pairs from the object region of the binocular image by using the foregoing pixel pair determining principle, where m is a positive integer. In a specific implementation, the computing device may find, by using a preset distance algorithm and by using a reference pixel as a reference, a pixel with a minimum distance from the reference pixel from the object region of the second image as a mapped pixel corresponding to the reference pixel. The preset distance algorithm includes but is not limited to a Hamming distance algorithm, a Euclidean distance algorithm, a cosine distance algorithm, and the like. The Hamming distance algorithm is used as an example. The computing device may calculate, by using the Hamming distance algorithm, Hamming code corresponding to the reference pixel and Hamming code corresponding to each feature pixel in the object region of the second image, then calculate a distance between the Hamming code corresponding to each feature pixel and the Hamming code of the reference pixel, and select a feature pixel with a minimum distance from the feature pixels as the mapped pixel corresponding to the reference pixel. For example, FIG. 6 is a schematic diagram of a pixel pair in an object region of binocular image. FIG. 6 shows three pixel pairs, which specifically include a pixel pair 1, a pixel pair 2, and a pixel pair 3. The pixel pair 1 includes a reference pixel 1 and a mapped pixel 1' (shown as 1 and 1' respectively in the figure). The mapped pixel 1' is specifically a pixel that is located in the

object region of the second image and that corresponds to the reference pixel 1 located in the object region of the first image. Alternatively, the reference pixel 1 is specifically a pixel that is located in the object region of the first image and that corresponds to the mapped pixel 1' in the object region of the second image. In other words, the reference pixel 1 and the mapped pixel 1' correspond to each other. The pixel pair 2 includes a reference pixel 2 and a mapped pixel 2'. The pixel pair 3 includes a reference pixel 3 and a mapped pixel 3'. For details about the pixel pair 2 and the pixel pair 3, refer to related descriptions of the pixel pair 1. The two pixels included in each pixel pair are in a one-to-one correspondence with each other in terms of locations, and details are not described herein again.

Step S205: The computing device calculates a depth value of each of the m pixel pairs based on two-dimensional coordinates of the m pixel pairs. Two-dimensional coordinates of the pixel pair include two-dimensional coordinates of one pixel pair located in the first image and two-dimensional coordinates of the other pixel pair located in the second image, that is, two-dimensional coordinates of the reference pixel and two-dimensional coordinates of the mapped pixel described above in the present invention. The computing device calculates the depth value of the pixel pair based on the two-dimensional coordinates, corresponding to the feature pixel in each pixel pair, in the binocular images. Specifically, the depth value may be a depth value of either feature pixel in the pixel pair, and the feature pixel may be specifically a reference pixel or a mapped pixel. Specifically, the computing device may separately obtain the two-dimensional coordinates of the reference pixel in the pixel pair in the first image and the two-dimensional coordinates of the mapped pixel in the pixel pair in the second image. Further, the depth value of the pixel pair is calculated based on the obtained two-dimensional coordinates of the reference pixel in the pixel pair and the two-dimensional coordinates of the mapped pixel in the pixel pair.

In an actual application, because epipolar lines of the corrected binocular images are collinear, for respective two-dimensional coordinates of the reference pixel and the mapped pixel included in each pixel pair, their vertical coordinates are the same, and their horizontal coordinates are different. For example, as shown in FIG. 7A, respective center points of the dual-lens camera are $O_1$ and $O_r$ shown in the figure. A distance B between $O_1$ and $O_r$ is referred to as a baseline distance. Two-dimensional coordinates of a reference pixel $P_1$ are $(x_l, y_l)$, and two-dimensional coordinates of a mapped pixel $P_r$ are $(x_r, y_r)$, where $y_l = y_r$. Correspondingly, the computing device may obtain a depth value d (which may be specifically a depth value of a feature pixel in the pixel pair) of the pixel pair through calculation by using the following formula (1), where the depth value represents a distance between a point P corresponding to the feature pixel in the real world and the dual-lens camera:

$$d = \frac{Bf}{x_l - x_r} \quad \text{formula (1)}$$

d represents the depth value. f represents a focal length of the dual-lens camera. B represents a distance between a center of a left lens and a center of a right lens in the dual-lens camera, may also be referred to as a baseline distance, and is specifically $O_lO_r$ shown in FIG. 7A. Optionally, if two-dimensional coordinates of a feature pixel (which may be specifically a reference pixel or a mapped pixel) in a pixel pair are two-dimensional coordinates in a regional coordinate system, the regional coordinate system is a coordinate system established in an object region of the binocular image, and is not an image coordinate system established in the binocular images. Correspondingly, before calculating the depth value of the feature pixel, the computing device further needs to convert the two-dimensional coordinates in the regional coordinate system into the two-dimensional coordinates in the image coordinate system, so that the computing device directly calculates the depth value of the feature pixel based on the two-dimensional coordinates of the feature pixel in the pixel pair in the image coordinate system, that is, the two-dimensional coordinates corresponding to the feature pixel in the binocular images.

For example, FIG. 7B is a schematic diagram of two-dimensional coordinates of a feature pixel in a pixel pair that are respectively located in a regional coordinate system and an image coordinate system. When the feature pixel is a reference pixel, FIG. 7B shows two-dimensional coordinates of the reference pixel located in a first image (that is, an image coordinate system $XOY$) and two-dimensional coordinates of the reference pixel located in an object region (that is, a regional coordinate system $X'O'Y'$) of the first image. When the feature pixel is a mapped pixel, FIG. 7B specifically shows two-dimensional coordinates of the mapped pixel located in a second image (an image coordinate system) and two-dimensional coordinates of the mapped pixel located in an object region (a regional coordinate system) of the second image.

As shown in FIG. 7B, the two-dimensional coordinates of the feature pixel in the regional coordinate system $X'O'Y'$ are $(x', y')$. Two-dimensional coordinates of an origin $O'$ (0, 0) in the region coordinate system located in the image coordinate system $XOY$ is $(x_0, y_0)$. Correspondingly, the two-dimensional coordinates of the feature pixel located in the image coordinate system $XOY$, that is, the corresponding two-dimensional coordinates of the feature pixel in the binocular images are $(x, y)$, where, $x = x_0 + x'$ and $y = y_0 + y'$.

Step S206: The computing device determines visual point cloud data of the to-be-detected object based on the depth value of each of the m pixel pairs.

After obtaining the depth value of each of the m pixel pairs, the computing device may obtain, with reference to the two-dimensional coordinates of the pixel pair, three-dimensional coordinates of the feature pixel included in each of the m pixel pairs. When the feature pixel included in the pixel pair is a reference pixel, the computing device may obtain three-dimensional coordinates of the reference pixel in the pixel pair based on the depth value of the reference pixel in the pixel pair and the two-dimensional coordinates, corresponding to the reference pixel, in the first image. When the feature pixel included in the pixel pair is a mapped pixel, the computing device may obtain three-dimensional coordinates of the mapped pixel in the pixel pair based on the depth value of the mapped pixel in the pixel pair and with reference to the two-dimensional coordinates, corresponding to the mapped pixel, in the second image.

For example, a reference pixel in a pixel pair is used as an example. A depth value of the reference pixel is d, and two-dimensional coordinates of the reference pixel in the first image are ($x_1$ , $y_1$). In this case, three-dimensional coordinates of the reference pixel are specifically ($x_1$ , $y_1$ , $d$).

Further, the computing device may determine the visual point cloud data of the to-be-detected object based on the three-dimensional coordinates of the feature pixel included in each of the m pixel pairs. Specifically, there are the following several implementations.

In a first manner, when calculation precision and a calculation amount are not considered, the computing device may directly use the three-dimensional coordinates of the feature pixel included in each of the m pixel pairs as the visual point cloud data of the to-be-detected object.

Specifically, to ensure accuracy of object detection, it needs to be ensured that both the visual point cloud data and the laser point cloud data are point cloud data in a same coordinate system. Therefore, when a coordinate system in which the three-dimensional coordinates of the feature pixel included in each of the m pixel pairs are located is different from a coordinate system corresponding to the laser point cloud data, the three-dimensional coordinates of the feature pixel included in each of the m pixel pairs need to be converted into corresponding three-dimensional coordinates in a same coordinate system as the laser point cloud data, and then, the converted three-dimensional coordinates are used as the visual point cloud data of the to-be-detected object.

For example, using an example in which a feature pixel in any pixel pair is a reference pixel, three-dimensional coordinates of the reference pixel in the any pixel pair are ($x_1$ , $y_1$ , $d$), and specifically represent corresponding three-dimensional coordinates of the reference pixel that are located in the first image (that is, the image coordinate system $XOY$). Because the image coordinate system $XOY$ in which the three-dimensional coordinates of the reference pixel are located is different from a lidar coordinate system in which the laser point cloud data is located, the computing device needs to convert the three-dimensional coordinates of the reference pixel into three-dimensional coordinates in the lidar coordinate system, that is, three-dimensional coordinates in a same coordinate system as the laser point cloud data. The lidar coordinate system is specifically a reference coordinate system used during laser point cloud data collection.

FIG. 8 is a schematic diagram of a scenario of a camera coordinate system and a lidar coordinate system. The camera coordinate system is a coordinate system established in space by using either camera in a dual-lens camera as a center. The figure shows a camera coordinate system established by using a center of a left lens as an origin. In a specific implementation, the computing device may calculate, by using an intrinsic parameter matrix (which may also be referred to as an intrinsic parameter) of the dual-lens camera, corresponding three-dimensional coordinates ($x_2$, $y_2$, $z_2$ ) of the reference pixel in the camera coordinate system $O''$-$X''Y''Z''$. A calculation formula of ($x_2$, $y_2$, $z_2$) is specifically shown in the following formula (2):

$$\begin{pmatrix} x_2 \\ y_2 \\ z_2 \end{pmatrix} = \begin{pmatrix} \dfrac{(x_1 - c_x)\times d}{f_x} \\ \dfrac{(y_1 - c_y)\times d}{f_y} \\ d \end{pmatrix} \quad \text{formula (2)}$$

The intrinsic parameter matrix is $\begin{pmatrix} f_x & 0 & c_x \\ 0 & f_y & c_y \\ 0 & 0 & 1 \end{pmatrix}$. $f_x$ is a focal length of the dual-lens camera in a direction $X''$. $f_y$ is a focal length of the dual-lens camera in a direction $Y''$. $c_x$ is an offset of an origin O in the image coordinate system relative to the origin $O''$ of the camera coordinate system in the direction $X''$. $c_y$ is an offset of the origin O in the image coordinate system relative to the origin $O''$ of the camera coordinate system in the direction $Y''$.

Further, the computing device may convert three-dimensional coordinates ($x_2$, $y_2$, $z_2$) of the reference pixel in the camera coordinate system $O''$-$X''Y''Z''$ into three-dimensional coordinates ($x_3$, $y_3$, $z_3$) in the lidar coordinate system $O'''$-$X'''Y'''Z'''$. That is, the computing device converts the three-dimensional coordinates ($x_1$, $y_1$, $d$) of the reference pixel in the first image (image coordinate system) into three-dimensional coordinates ($x_3$, $y_3$, $z_3$ ) that are the same as coordinates of the lidar data.

For example, referring to the diagram of the scenario shown in FIG. 8, the computing device may calculate a transformation matrix $T_{O''O'''}$ from the camera

coordinate system to the lidar coordinate system based on a relative posture between the camera coordinate system $O''$-$X''Y''Z''$ and the lidar coordinate system $O'''$-$X'''Y'''Z'''$.

Correspondingly, the computing device may convert the corresponding three-dimensional coordinates ($x_2$, $y_2$, $z_2$) of the reference pixel in the camera coordinate system into the three-dimensional coordinates ($x_3$, $y_3$, $z_3$) in the lidar coordinate system by using the following formula (3):

$$\begin{pmatrix} x_3 \\ y_3 \\ z_3 \end{pmatrix} = T_{O''O'''} \times \begin{pmatrix} x_2 \\ y_2 \\ z_2 \end{pmatrix} \quad \text{formula (3)}$$

In a second manner, when calculation precision and a calculation amount are considered, the computing device may sift a sifted pixel from the feature pixel included in each of the m pixel pairs. Further, the computing device may determine, based on the sifted pixel, a corresponding first pixel that can be used as the visual point cloud data, and further use three-dimensional coordinates of the first pixel as the visual point cloud data of the to-be-detected object. Specifically, the computing device may reserve a feature pixel that meets a preset condition, use the feature pixel as a sifted pixel, and remove a feature pixel that does not meet the preset condition. The preset condition is system-defined, and is used to sift a feature pixel. For example, the preset condition may be specifically that a depth value of a feature pixel does not exceed a first preset value. The first preset value is system-defined, for example, an empirical value set based on user experience, or a value obtained through statistics collection based on some columns of data. Optionally, the first preset value may be specifically a sum of an average depth and a second preset value. The average depth value is specifically an average value of the depth values of all the m pixel pairs. The second preset value may be specifically system-defined. Optionally, the second preset value may be specifically a preset standard deviation. The preset standard deviation is specifically a standard deviation of the depth values of all the m pixel pairs.

Further, the computing device may use the sifted pixel as the first pixel. Optionally, when a quantity of to-be-sifted pixels is relatively small, for example, less than or equal to a first preset quantity, to ensure accuracy of object detection, the computing device may interpolate the to-be-sifted pixels by using a first preset interpolation algorithm, to obtain one or more first interpolated pixels. Correspondingly, the computing device may use both the sifted pixel and the first interpolated pixel as first pixels, and further, use three-dimensional coordinates of the first pixels as the visual point cloud data of the to-be-detected object. A quantity of the first pixels is not limited, and there may be a plurality of first pixels herein.

The first preset quantity is a system-defined positive integer, for example, is set based on user experience or an actual requirement. The first preset interpolation algorithm is specifically a system-defined algorithm and is used for interpolation of a pixel. For example, the computing device may obtain three-dimensional coordinates of an interpolated pixel through calculation based on respective three-dimensional coordinates of two sifted pixels by using an interpolation algorithm, to obtain the interpolated pixel. The interpolation algorithm includes but is not limited to any one of the following: a Lagrange (lagrange) interpolation algorithm, a Newton (newton) interpolation algorithm, a piecewise linear interpolation algorithm, a non-linear interpolation algorithm, a piecewise cubic Hermite interpolation algorithm, a spline interpolation algorithm, and the like.

Optionally, when the three-dimensional coordinates of the first pixel are not three-dimensional coordinates in the lidar coordinate system, the computing device may convert the three-dimensional coordinates of the first pixel into three-dimensional coordinates of a second pixel in a same coordinate system (that is, the lidar coordinate system) as the laser point cloud data, and further, use the three-dimensional coordinates of the second pixel after conversion as the visual point cloud data of the to-be-detected object. For details of conversion between three-dimensional coordinates, refer to related descriptions in the foregoing first embodiment. Details are not described herein again.

Optionally, after the computing device obtains the three-dimensional coordinates of the second pixel in the lidar coordinate system, if a quantity of second pixels is relatively small, for example, the quantity is less than or equal to a second preset quantity, the computing device may interpolate the second pixel by using a second preset interpolation algorithm, to obtain one or more second interpolated pixels. Because the three-dimensional coordinates of the second pixel are the three-dimensional coordinates in the lidar coordinate system, three-dimensional coordinates of the second interpolated pixel are also three-dimensional coordinates in the lidar coordinate system. Therefore, the computing device may directly use both the three-dimensional coordinates of the second interpolated pixel and the three-dimensional coordinates of the second pixel as the visual point cloud data of the to-be-detected object.

The second preset quantity is also system-defined, and may be the same as or different from the foregoing first preset quantity. This is not limited in the present invention. The second preset interpolation algorithm may also be a system-defined algorithm and is used for interpolation of a pixel. For details, refer to related descriptions of the first preset interpolation algorithm. Details are not described herein again. The first preset interpolation algorithm and the second preset interpolation algorithm may be the same, or may be different. This is not limited in the present invention.

In an actual application, to ensure accuracy of

object detection, a quantity of pixels included in the visual point cloud data is usually greater than or equal to a third preset quantity. The third preset quantity may be obtained through a series of statistics collection, and may be, for example, 200.

Step S207: The computing device determines the to-be-detected object based on the visual point cloud data of the to-be-detected object and laser point cloud data of the to-be-detected object. The laser point cloud data is data obtained by scanning the to-be-detected object by using a lidar. Both the visual point cloud data and the laser point cloud data are three-dimensional coordinate data (which may also be referred to as three-dimensional data for short) in a same coordinate system.

The computing device may merge the visual point cloud data and the laser point cloud data of the to-be-detected object to generate visual-laser point cloud data (which may also be referred to as merged point cloud data). Further, the to-be-detected object in the generated merged point cloud data is detected and recognized by using a preset point cloud segmentation algorithm, to obtain the to-be-detected object.

The laser point cloud data is data obtained by scanning the to-be-detected object in advance by using the lidar, and the data is data collected in the lidar coordinate system. For details, refer to FIG. 8. The preset point cloud segmentation algorithm is system-defined and is used for point cloud data clustering and recognition. The point cloud segmentation algorithm includes but is not limited to a European point cloud segmentation algorithm, an angle cosine point cloud segmentation algorithm, a K-Means point cloud segmentation algorithm, or another algorithm used to implement point cloud data clustering and recognition.

Specifically, after obtaining the visual point cloud data and the laser point cloud data of the to-be-detected object, the computing device generates merged point cloud data (that is, the visual-laser point cloud data described above) based on the visual point cloud data and the laser point cloud data. A quantity of to-be-detected objects is not limited, and there may be one or more to-be-detected objects. FIG. 9 is a schematic diagram of possible merged point cloud data. As shown in FIG. 9, solid point data represents visual point cloud data, and hollow point data represents laser point cloud data.

Further, the computing device performs clustering on the merged point cloud data by using a point cloud segmentation algorithm, to obtain respective cluster point cloud data of each to-be-detected object. Then, the computing device performs contour feature extraction on the cluster point cloud data of each to-be-detected object, to recognize and obtain the to-be-detected object corresponding to the cluster point cloud data. For example, the point cloud segmentation algorithm is a Euclidean point cloud segmentation algorithm. The computing device may cluster point cloud data whose Euclidean distance is less than or equal to a preset distance, as cluster point cloud data of a to-be-detected object. Further, contour extraction is performed on the cluster point cloud data of the to-be-detected object, to obtain a contour of the to-be-detected object described by the cluster point cloud quantity, to learn of the to-be-detected object. The to-be-detected object may specifically include but is not limited to any one of the following: a vehicle, a person, a dog, a tree, a building, a cup, and the like.

FIG. 10 is a schematic diagram of merged point cloud data clustering. FIG. 10 specifically shows cluster point cloud data of a vehicle. After obtaining the cluster point cloud data of the vehicle, a computing device may measure a rectangular box in which the cluster point cloud data is correspondingly located. For example, if a height and a width of the matrix box meet dimensions of a preset vehicle, it may be determined that a to-be-detected object corresponding to the cluster point cloud data is a vehicle. The dimensions of the preset vehicle may be specifically system-defined, for example, set based on user experience.

Through implementation of the embodiments of the present invention, problems in the prior art such as low accuracy of object detection or difficulty in implementing object detection can be resolved. The present invention provides an object detection solution based on mixing of visual point cloud data and laser point cloud data, so that object detection accuracy can be improved.

With reference to the foregoing related descriptions in the embodiments in FIG. 1 to FIG. 10, the following describes related apparatuses to which the present invention is applicable. FIG. 11 is a schematic structural diagram of an object detection apparatus according to an embodiment of the present invention. The object detection apparatus 600 includes a communication module 602 and a processing module 604. The processing module 604 may be configured to control and manage an action of the object detection apparatus 600. For example, the processing module 604 is configured to perform step S201 to step S207 in FIG. 2, and/or is configured to perform other content of the technology described in the text. The communication module 602 is configured to communicate with another module or device. For example, the communication module 602 communicates with another device, to obtain binocular images captured by a dual-lens camera of the another device.

Optionally, the object detection apparatus 600 may further include a storage module 606. The storage module 606 is configured to store program code and data of the load balancing apparatus 600, for example, store program code used for object detection. The processing module 604 is configured to invoke the program code in the storage module 606 to implement some or all of the implementation steps in the embodiment shown in FIG. 2, and/or is configured to perform other content steps of the technology described in the text.

The processing module 604 may be a processor or a controller, such as a central processing unit

(Central Processing Unit, CPU), a general-purpose processor, a digital signal processor (Digital Signal Processing, DSP), an application-specific integrated circuit (Application Specific Integrated Circuit, ASIC), a field programmable gate array (Field-Programmable Gate Array, FPGA), or another programmable logical device, a transistor logical device, a hardware component, or any combination thereof. The controller/processor may implement or execute various example logical blocks, modules, and circuits described with reference to content disclosed in the present invention. The processor may be a combination of processors implementing a computing function, for example, a combination of one or more microprocessors, or a combination of the DSP and a microprocessor. The communication module 602 may be a communication interface, a transceiver, a transceiver circuit, or the like. The communication interface is a general term, and may include one or more interfaces, for example, an interface between the communication module and the processing module, or an interface between the load balancing apparatus and user equipment. The storage module 606 may be a memory, or another service or module configured to provide a storage function.

When the processing module 604 is a processor, the communication module 602 is a communication interface, and the storage module 606 is a memory, the object detection apparatus in this embodiment of the present invention may be an object detection apparatus (which may also be referred to as a computing device) shown in FIG. 7.

Referring to FIG. 11, the computing device 700 includes one or more processors 701, a communication interface 702, and a memory 703. The processor 701, the communication interface 702, and the memory 703 may be connected by using a bus or in another manner. In this embodiment of the present invention, an example in which the processor 701, the communication interface 702, and the memory 703 are connected by using a bus 704 is used.

The processor 701 may include one or more general-purpose processors, for example, a central processing unit (Central Processing Unit, CPU). The processor 701 may be configured to run a program of any one or more of the following function modules in related program code: a communication module, a processing module, a storage module, and the like. In other words, the processor 701 may execute the program code to implement any one or more functions of the function modules such as the communication module and the processing module. For details about the communication module and the processing module, refer to related descriptions in the foregoing embodiment.

The communication interface 702 may be a wired interface (for example, an Ethernet interface) or a wireless interface (for example, a cellular network interface or a wireless local area network interface), and is configured to communicate with another module/device. For example, the communication interface 702 in this embodiment of the present invention may be specifically configured to receive binocular images or the like sent by another device.

The memory 703 may include a volatile memory (Volatile Memory), for example, a random access memory (Random Access Memory, RAM). The memory may also include a non-volatile memory (Non-Volatile Memory), for example, a read-only memory (Read-Only Memory, ROM), a flash memory (Flash Memory), a hard disk drive (Hard Disk Drive, HDD), or a solid-state drive (Solid-State Drive, SSD). The memory 703 may further include a combination of the foregoing types of memories. The memory 703 may be configured to store a set of program code, so that the processor 701 invokes the program code stored in the memory 703 to implement functions of the communication module and/or the processing module in the embodiments of the present invention.

It should be noted that FIG. 10 or FIG. 11 is merely a possible implementation of this embodiment of this application. In an actual application, the load balancing apparatus may further include more or fewer components. This is not limited herein. For content that is not shown or not described in this embodiment of the present invention, refer to related descriptions in the embodiment in FIG. 2. Details are not described herein again.

An embodiment of the present invention further provides a computer non-transitory storage medium. The computer non-transitory storage medium stores an instruction. When the instruction is run on a processor, the method procedure shown in FIG. 2 is implemented.

An embodiment of the present invention further provides a computer program product. When the computer program product is run on a processor, the method procedure shown in FIG. 2 is implemented.

Methods or algorithm steps described in combination with the content disclosed in this embodiment of the present invention may be implemented by hardware, or may be implemented by a processor by executing a software instruction. The software instruction may include a corresponding software module. The software module may be stored in a random access memory (Random Access Memory, RAM for short), a flash memory, a read-only memory (Read Only Memory, ROM), an erasable programmable read only memory (Erasable Programmable ROM, EPROM), an electrically erasable programmable read only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a computing device. Certainly, the processor and the storage medium may exist in the device as discrete components. A person of ordinary skill in the

art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes: any medium that can store program code, such as a ROM, a RAM, a magnetic disk, or an optical disc.

## Claims

**1.** A computer-implemented object detection method, wherein the method comprises:

- obtaining (S201), by a computing device, two-dimensional coordinates of m pixel pairs from an object region of binocular image, wherein the object region of the binocular image is an image region occupied by a to-be-detected object in the binocular image, and the binocular images comprise a first image and a second image that are captured by using a dual-lens camera, one pixel in each pixel pair is from the first image, and the other pixel in each pixel pair is from the second image, and pixels in each pixel pair respectively correspond to a same feature of the object region in each of the first image and the second image;
- determining three-dimensional coordinates of the to-be-detected object in a camera coordinate system based on the two-dimensional coordinates of the m pixel pairs, wherein the camera coordinate system is a coordinate system formed by using either lens of the dual-lens camera as an origin,
wherein the determining the three-dimensional coordinates of the to-be-detected object in the camera coordinate system based on the two-dimensional coordinates of the m pixel pairs comprises:
    - ◦ determining (S202) three-dimensional coordinates of the to-be-detected object in an image coordinate system based on the two-dimensional coordinates of the m pixel pairs, wherein the three-dimensional coordinates of the to-be-detected object in the image coordinate system comprise two-dimensional coordinates and depth values of the to-be-detected object in a coordinate system established based on the first image, and
    - ◦ converting the three-dimensional coordinates of the to-be-detected object in the image coordinate system into the three-dimensional coordinates of the to-be-detected object in the camera coordinate system based on a focal length of the dual-lens camera and an offset of an origin in the image coordinate system relative to an origin of the camera coordinate system;
- converting the three-dimensional coordinates of the to-be-detected object in the camera coordinate system into data in a coordinate system in which laser point cloud data of the to-be-detected object is located, and merging the data and the laser point cloud data into merged point cloud data, wherein the laser point cloud data is data obtained by scanning the to-be-detected object by using a lidar; and
- determining (S207) the to-be-detected object based on the merged point cloud data.

**2.** The method according to claim 1, wherein the determining (S202) the three-dimensional coordinates of the to-be-detected object in the image coordinate system based on the two-dimensional coordinates of the m pixel pairs comprises:

calculating (S205) a depth value of each of the m pixel pairs based on the two-dimensional coordinates of the m pixel pairs and a baseline and the focal length of the dual-lens camera, wherein the two-dimensional coordinates of the pixel pair comprise two-dimensional coordinates of one pixel in the pixel pair that is located in the first image and two-dimensional coordinates of the other pixel in the pixel pair that is located in the second image; and
determining a first pixel based on the depth value of each of the m pixel pairs, wherein a depth value of the first pixel does not exceed a first preset value, and the three-dimensional coordinates of the to-be-detected object in the image coordinate system comprise three-dimensional coordinates of the first pixel in the image coordinate system.

**3.** The method according to claim 1 or 2, wherein that the depth value of the first pixel does not exceed the first preset value comprises that:
the depth value of the first pixel does not exceed a sum of an average depth value and a second preset value, wherein the average depth value is an average value of depth values of all pixel pairs in the m pixel pairs.

**4.** The method according to claim 2 or 3, wherein the method further comprises: interpolating the first pixel based on a preset interpolation algorithm to obtain an interpolated pixel, wherein the three-dimensional coordinates of the to-be-detected object in the image coordinate system comprise three-dimensional coordinates of the interpolated pixel in the image coordinate system.

**5.** The method according to any one of claims 1 to 4, wherein the binocular images are images obtained after images captured by the dual-lens camera are processed by using a distortion parameter and an extrinsic parameter matrix of the binocular images.

**6.** A computing device (600), wherein the computing device (600) is configured to perform the method according to any of claims 1 to 5.

**7.** A computer readable storage medium, wherein the computer readable storage medium includes instructions, and when at least one processor of a computing device executes the instructions, the computing device is caused to perform the method according to any one of claims 1 to 5.

**Patentansprüche**

**1.** Computerimplementiertes Objektdetektionsverfahren, wobei das Verfahren Folgendes umfasst:

• Erlangen (S201), durch eine Rechenvorrichtung, von zweidimensionalen Koordinaten von m Pixelpaaren aus einem Objektbereich eines binokularen Bildes, wobei der Objektbereich des binokularen Bildes ein Bildbereich ist, der von einem zu erfassenden Objekt in dem binokularen Bild eingenommen wird, und die binokularen Bilder ein erstes Bild und ein zweites Bild umfassen, die durch Verwenden einer Doppellinsenkamera aufgenommen werden, wobei ein Pixel in jedem Pixelpaar von dem ersten Bild ist und das andere Pixel in jedem Pixelpaar von dem zweiten Bild ist, und die Pixel in jedem Pixelpaar jeweils einem gleichen Merkmal des Objektbereichs in jedem des ersten und des zweiten Bildes entsprechen;
• Bestimmen dreidimensionaler Koordinaten des zu erfassenden Objekts in einem Kamerakoordinatensystem basierend auf den zweidimensionalen Koordinaten der m Pixelpaare, wobei das Kamerakoordinatensystem ein Koordinatensystem ist, das durch Verwenden eines der beiden Objektive der Doppellinsenkamera als Ursprung gebildet wird, wobei das Bestimmen der dreidimensionalen Koordinaten des zu erfassenden Objekts in dem Kamerakoordinatensystem basierend auf den zweidimensionalen Koordinaten der m Pixelpaare Folgendes umfasst:

◦ Bestimmen (S202) dreidimensionaler Koordinaten des zu erfassenden Objekts in einem Bildkoordinatensystem basierend auf den zweidimensionalen Koordinaten der m Pixelpaare, wobei die dreidimensionalen Koordinaten des zu erfassenden Objekts in dem Bildkoordinatensystem zweidimensionale Koordinaten und Tiefenwerte des zu erfassenden Objekts in einem Koordinatensystem umfassen, das basierend auf dem ersten Bild hergestellt wird, und
◦ Umwandeln der dreidimensionalen Koordinaten des zu erfassenden Objekts in dem Bildkoordinatensystem in die dreidimensionalen Koordinaten des zu erfassenden Objekts in dem Kamerakoordinatensystem basierend auf einer Brennweite der Doppellinsenkamera und eines Versatzes eines Ursprungs in dem Bildkoordinatensystem relativ zu einem Ursprung des Kamerakoordinatensystems;

• Umwandeln der dreidimensionalen Koordinaten des zu erfassenden Objekts in dem Kamerakoordinatensystem in Daten in einem Koordinatensystem, in dem sich Laserpunktwolkendaten des zu erfassenden Objekts befinden, und Zusammenführen der Daten und der Laserpunktwolkendaten zu zusammengeführten Punktwolkendaten, wobei die Laserpunktwolkendaten Daten sind, die durch Abtasten des zu erfassenden Objekts unter Verwendung eines Lidars erhalten wurden; und
• Bestimmen (S207) des zu erfassenden Objekts basierend auf den zusammengeführten Punktwolkendaten.

**2.** Verfahren nach Anspruch 1, wobei das Bestimmen (S202) der dreidimensionalen Koordinaten des zu erfassenden Objekts in dem Bildkoordinatensystem basierend auf den zweidimensionalen Koordinaten der m Pixelpaare Folgendes umfasst: Berechnen (S205) eines Tiefenwertes jedes der m Pixelpaare basierend auf den zweidimensionalen Koordinaten der m Pixelpaare und einer Grundlinie und der Brennweite der Doppellinsenkamera, wobei die zweidimensionalen Koordinaten des Pixelpaares zweidimensionale Koordinaten eines Pixels in dem Pixelpaar, das sich in dem ersten Bild befindet, und zweidimensionale Koordinaten des anderen Pixels in dem Pixelpaar, das sich in dem zweiten Bild befindet, umfassen; und
Bestimmen eines ersten Pixels basierend auf dem Tiefenwert jedes der m Pixelpaare, wobei ein Tiefenwert des ersten Pixels einen ersten voreingestellten Wert nicht überschreitet, und die dreidimensionalen Koordinaten des zu erfassenden Objekts in dem Bildkoordinatensystem dreidimensionale Koordinaten des ersten Pixels in dem Bildkoordinatensystem umfassen.

3. Verfahren nach Anspruch 1 oder 2, wobei die Tatsache, dass der Tiefenwert des ersten Pixels den ersten voreingestellten Wert nicht überschreitet, umfasst, dass:
der Tiefenwert des ersten Pixels eine Summe aus einem durchschnittlichen Tiefenwert und einem zweiten voreingestellten Wert nicht überschreitet, wobei der durchschnittliche Tiefenwert ein Durchschnittswert der Tiefenwerte aller Pixelpaare in den m Pixelpaaren ist.

4. Verfahren nach Anspruch 2 oder 3, wobei das Verfahren ferner Folgendes umfasst: Interpolieren des ersten Pixels basierend auf einem voreingestellten Interpolationsalgorithmus, um ein interpoliertes Pixel zu erlangen, wobei die dreidimensionalen Koordinaten des zu erfassenden Objekts in dem Bildkoordinatensystem dreidimensionale Koordinaten des interpolierten Pixels in dem Bildkoordinatensystem umfassen.

5. Verfahren nach einem der Ansprüche 1 bis 4, wobei die binokularen Bilder Bilder sind, die erlangt werden, nachdem von der Doppellinsenkamera aufgenommene Bilder unter Verwendung eines Verzerrungsparameters und einer extrinsischen Parametermatrix der binokularen Bilder verarbeitet wurden.

6. Rechenvorrichtung (600), wobei die Rechenvorrichtung (600) dazu konfiguriert ist, das Verfahren nach einem der Ansprüche 1 bis 5 durchzuführen.

7. Computerlesbares Speichermedium, wobei das computerlesbare Speichermedium Anweisungen beinhaltet, und, wenn mindestens ein Prozessor einer Rechenvorrichtung die Anweisungen ausführt, die Rechenvorrichtung veranlasst wird, das Verfahren nach einem der Ansprüche 1 bis 5 durchzuführen.

## Revendications

1. Procédé de détection d'objet mis en œuvre par ordinateur, dans lequel le procédé comprend :

   • l'obtention (S201), par un dispositif informatique, de coordonnées bidimensionnelles de m paires de pixels à partir d'une région d'objet d'une image binoculaire, dans lequel la région d'objet de l'image binoculaire est une région d'image occupée par un objet à détecter dans l'image binoculaire, et les images binoculaires comprennent une première image et une seconde image qui sont capturées à l'aide d'une caméra à double objectif, un pixel dans chaque paire de pixels provient de la première image, et l'autre pixel dans chaque paire de pixels provient de la seconde image, et les pixels dans chaque paire de pixels correspondent respectivement à une même caractéristique de la région d'objet dans chacune de la première image et de la seconde image ;
   • la détermination de coordonnées tridimensionnelles de l'objet à détecter dans un système de coordonnées de caméra sur la base des coordonnées bidimensionnelles des m paires de pixels, dans lequel le système de coordonnées de caméra est un système de coordonnées formé à l'aide de l'un ou l'autre objectif de la caméra à double objectif comme origine, dans lequel la détermination des coordonnées tridimensionnelles de l'objet à détecter dans le système de coordonnées de caméra sur la base des coordonnées bidimensionnelles des m paires de pixels comprend :

     ◦ la détermination (S202) de coordonnées tridimensionnelles de l'objet à détecter dans un système de coordonnées d'image sur la base des coordonnées bidimensionnelles des m paires de pixels, dans lequel les coordonnées tridimensionnelles de l'objet à détecter dans le système de coordonnées d'image comprend des coordonnées bidimensionnelles et des valeurs de profondeur de l'objet à détecter dans un système de coordonnées établi sur la base de la première image, et
     ◦ la conversion des coordonnées tridimensionnelles de l'objet à détecter dans le système de coordonnées d'image en coordonnées tridimensionnelles de l'objet à détecter dans le système de coordonnées de caméra sur la base d'une distance focale de la caméra à double objectif et d'un décalage d'une origine dans le système de coordonnées d'image par rapport à une origine du système de coordonnées de caméra ;

   • la conversion des coordonnées tridimensionnelles de l'objet à détecter dans le système de coordonnées de caméra en données dans un système de coordonnées dans lequel se trouvent des données du nuage de points laser de l'objet à détecter, et la fusion des données et des données du nuage de points laser en données de nuage de points fusionnées, dans lequel les données du nuage de points laser sont des données obtenues en scannant l'objet à détecter à l'aide d'un lidar ; et
   • la détermination (S207) de l'objet à détecter sur la base des données du nuage de points fusionnées.

2. Procédé selon la revendication 1, dans lequel la détermination (S202) des coordonnées tridimensionnelles de l'objet à détecter dans le système de coordonnées d'image sur la base des coordonnées bidimensionnelles des m paires de pixels, comprend : le calcul (S205) d'une valeur de profondeur pour chacune des m paires de pixels sur la base des coordonnées bidimensionnelles des m paires de pixels et d'une ligne de base et de la distance focale de la caméra à double objectif, dans lequel les coordonnées bidimensionnelles de la paire de pixels comprennent des coordonnées bidimensionnelles d'un pixel de la paire de pixels qui est située dans la première image et des coordonnées bidimensionnelles de l'autre pixel de la paire de pixels qui est située dans la seconde image ; et
la détermination d'un premier pixel sur la base de la valeur de profondeur de chacune des m paires de pixels, dans lequel une valeur de profondeur du premier pixel ne dépasse pas une première valeur prédéfinie, et les coordonnées tridimensionnelles de l'objet à détecter dans le système de coordonnées d'image comprennent des coordonnées tridimensionnelles du premier pixel dans le système de coordonnées d'image.

3. Procédé selon la revendication 1 ou 2, dans lequel le fait que la valeur de profondeur du premier pixel ne dépasse pas la première valeur prédéfinie comprend le fait que :
la valeur de profondeur du premier pixel ne dépasse pas une somme d'une valeur de profondeur moyenne et d'une seconde valeur prédéfinie, dans lequel la valeur de profondeur moyenne est une valeur moyenne de valeurs de profondeur de toutes les paires de pixels dans les m paires de pixels.

4. Procédé selon la revendication 2 ou 3, dans lequel le procédé comprend également : l'interpolation du premier pixel sur la base d'un algorithme d'interpolation prédéfini pour obtenir un pixel interpolé, dans lequel les coordonnées tridimensionnelles de l'objet à détecter dans le système de coordonnées d'image comprennent les coordonnées tridimensionnelles du pixel interpolé dans le système de coordonnées d'image.

5. Procédé selon l'une quelconque des revendications 1 à 4, dans lequel les images binoculaires sont des images obtenues après que les images capturées par la caméra à double objectif ont été traitées à l'aide d'un paramètre de distorsion et d'une matrice de paramètres extrinsèques des images binoculaires.

6. Dispositif informatique (600), dans lequel le dispositif informatique (600) est configuré pour réaliser le procédé selon l'une quelconque des revendications 1 à 5.

7. Support de stockage lisible par ordinateur, dans lequel le support de stockage lisible par ordinateur comporte des instructions, et lorsqu'au moins un processeur d'un dispositif informatique exécute les instructions, le dispositif informatique est amené à réaliser le procédé selon l'une quelconque des revendications 1 à 5.

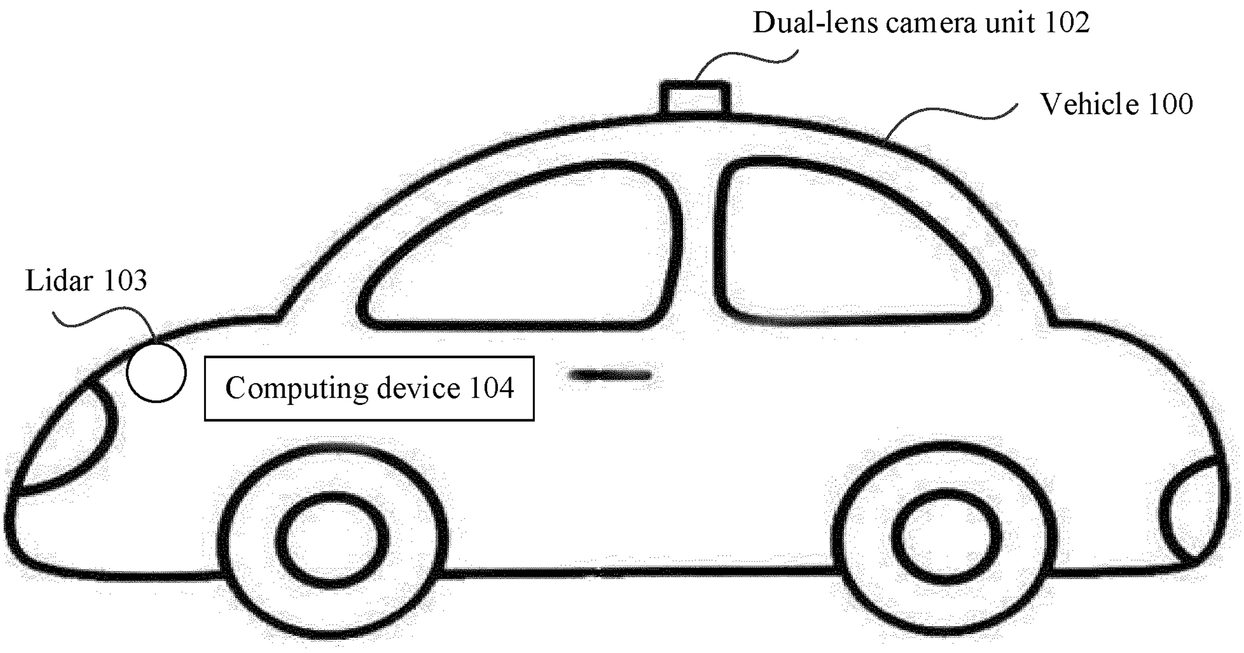
Dual-lens camera unit 102
Vehicle 100
Lidar 103
Computing device 104

FIG. 1A

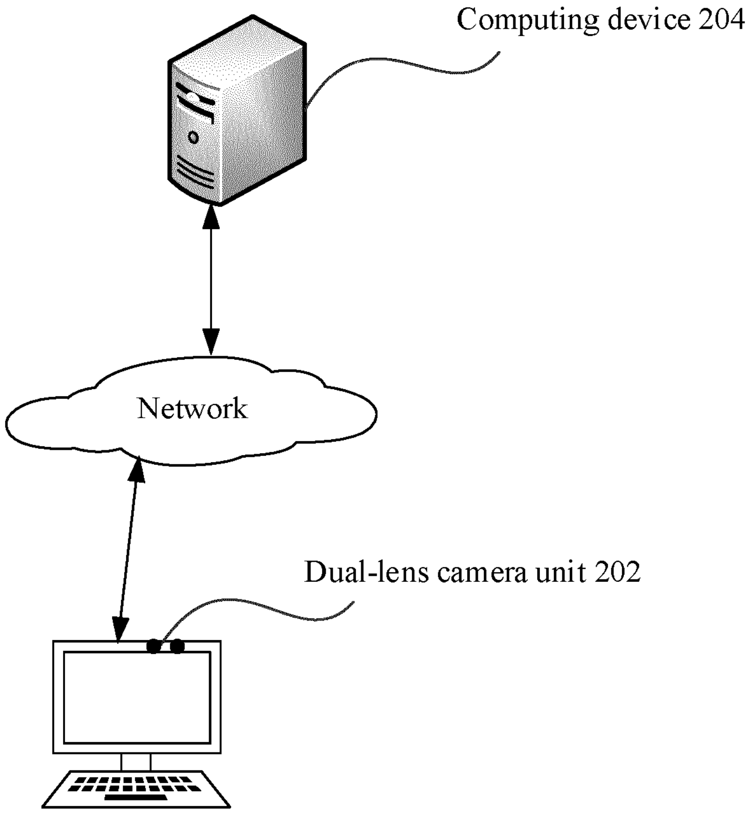
Computing device 204
Network
Dual-lens camera unit 202

FIG. 1B

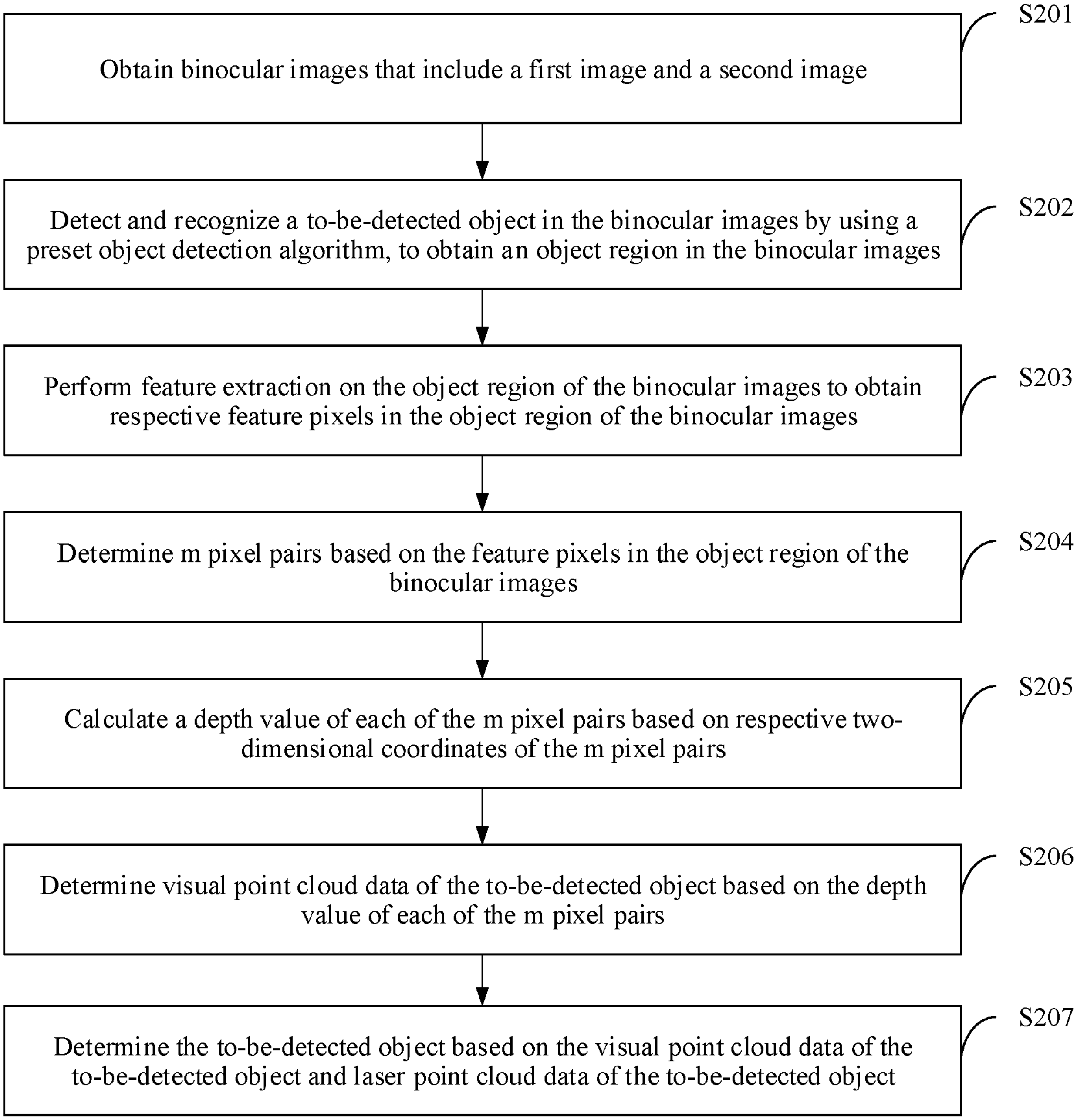
Obtain binocular images that include a first image and a second image
S201
Detect and recognize a to-be-detected object in the binocular images by using a preset object detection algorithm, to obtain an object region in the binocular images
S202
Perform feature extraction on the object region of the binocular images to obtain respective feature pixels in the object region of the binocular images
S203
Determine m pixel pairs based on the feature pixels in the object region of the binocular images
S204
Calculate a depth value of each of the m pixel pairs based on respective two-dimensional coordinates of the m pixel pairs
S205
Determine visual point cloud data of the to-be-detected object based on the depth value of each of the m pixel pairs
S206
Determine the to-be-detected object based on the visual point cloud data of the to-be-detected object and laser point cloud data of the to-be-detected object
S207

FIG. 2

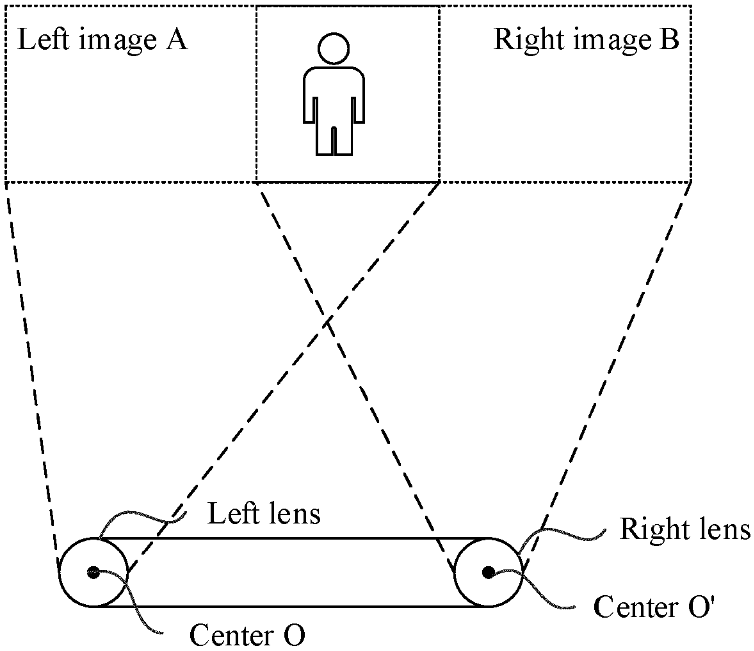
Left image A
Right image B
Left lens
Right lens
Center O
Center O'

FIG. 3

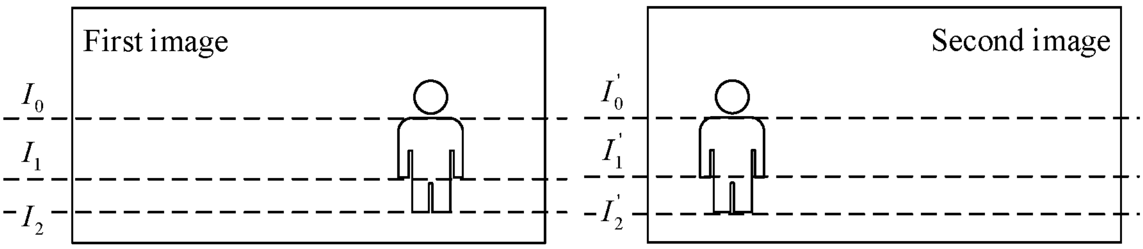
First image
Second image
$I_0$
$I_1$
$I_2$
$I_0'$
$I_1'$
$I_2'$

FIG. 4

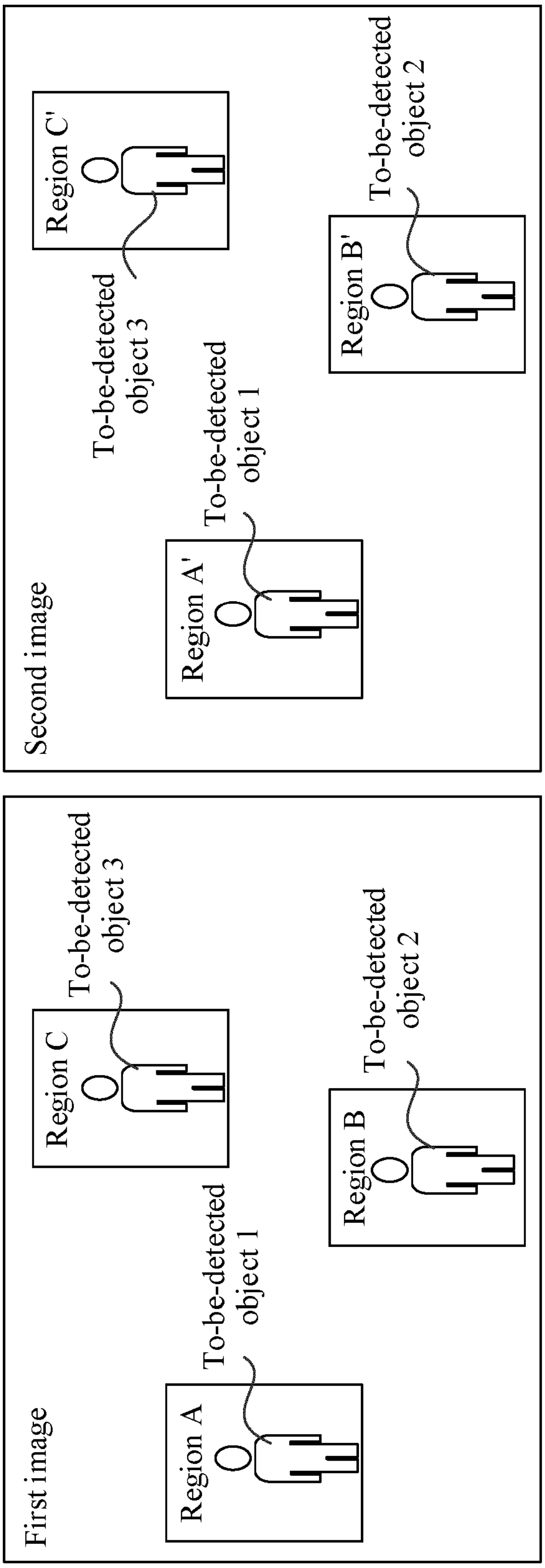
First image
Region A
To-be-detected object 1
Region C
To-be-detected object 3
Region B
To-be-detected object 2
Second image
Region A'
To-be-detected object 1
To-be-detected object 3
Region C'
Region B'
To-be-detected object 2

FIG. 5

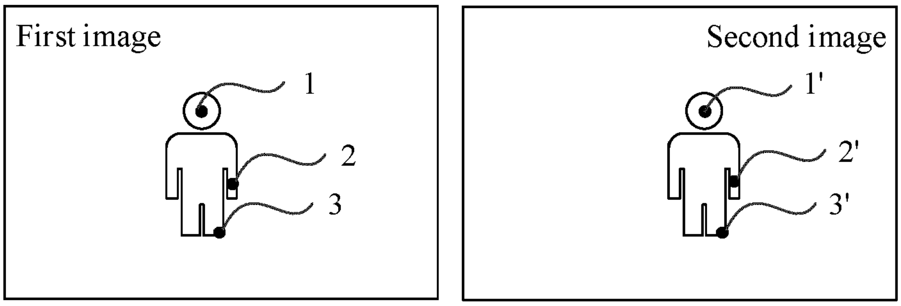


FIG. 6

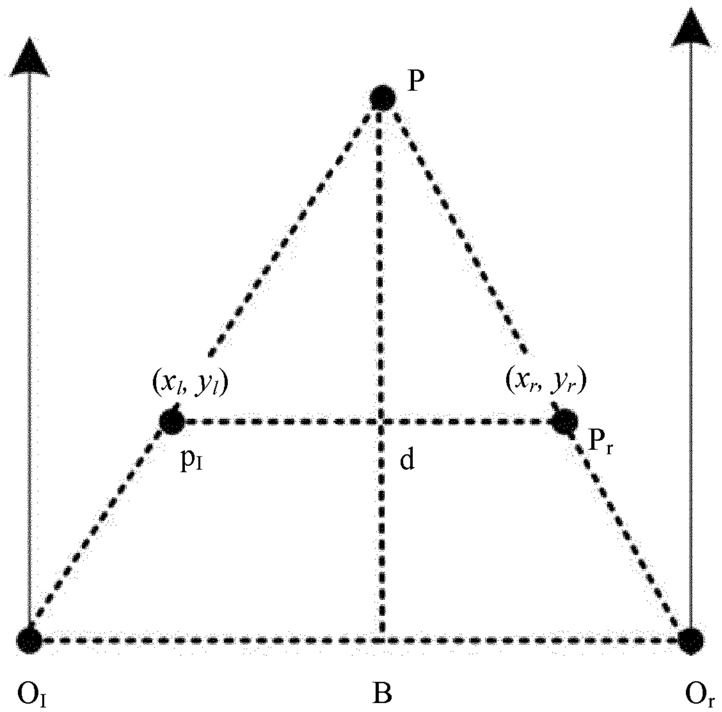


FIG. 7A

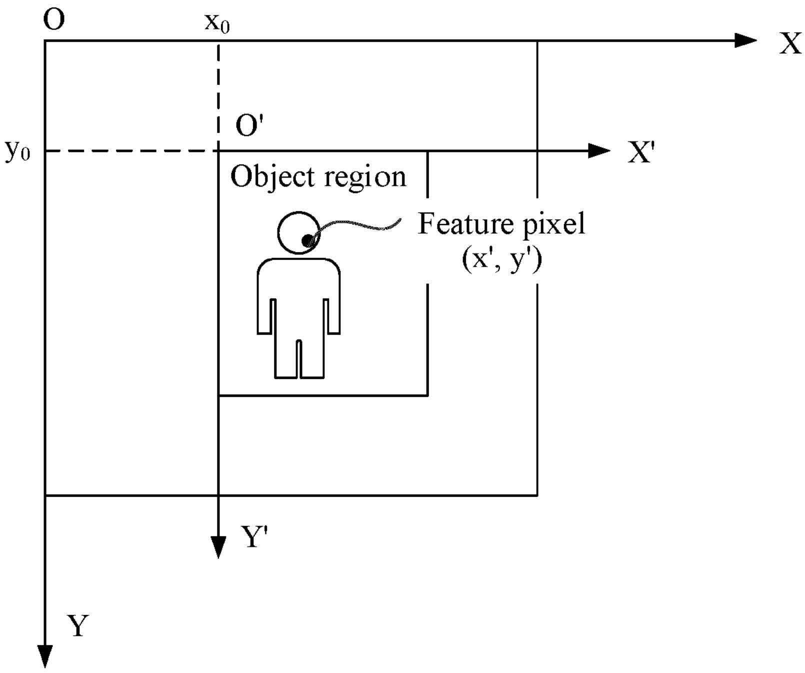
O
$x_0$
X
O'
$y_0$
X'
Object region
Feature pixel
(x', y')
Y'
Y

FIG. 7B

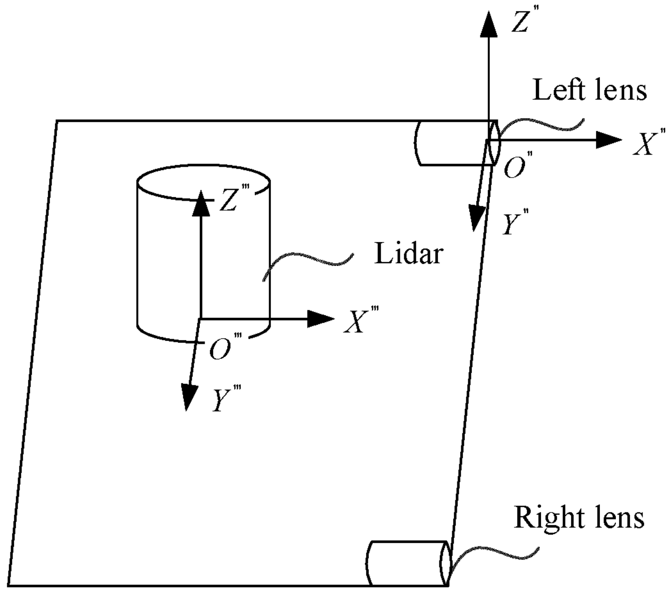
Z"
Left lens
X"
O"
Y"
Z'"
Lidar
X'"
O'"
Y'"
Right lens

FIG. 8

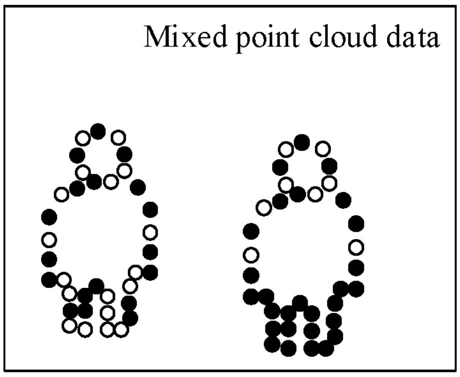
Mixed point cloud data

FIG. 9

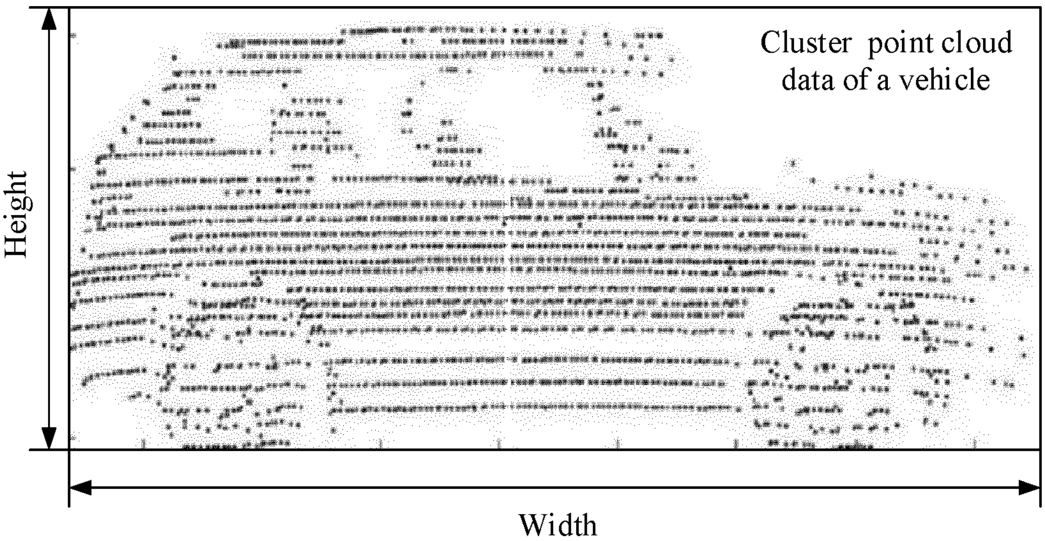
Cluster point cloud data of a vehicle
Height
Width

FIG. 10

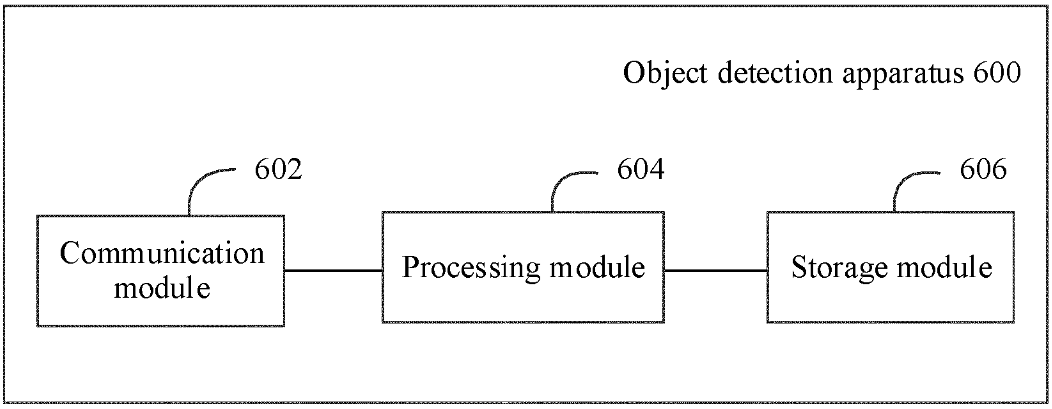
Object detection apparatus 600
602
604
606
Communication module
Processing module
Storage module

FIG. 11

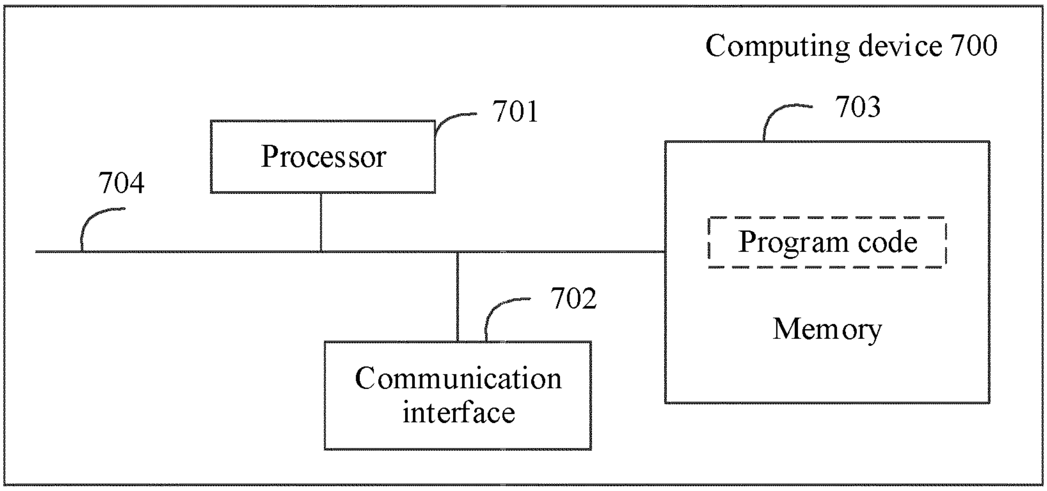
Computing device 700
701
703
Processor
704
Program code
702
Memory
Communication interface

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108828606 A
- US 20170310945 A1
- WO 2017122529 A1


### Non-patent literature cited in the description


- **FISHER et al.** *Combination of Time-of-Flight Depth and Stereo using Semiglobal Optimization*